# EUROPÄISCHE PATENTSCHRIFT

(11) **EP 1 376 001 B1**
(45) Veröffentlichungstag und Bekanntmachung des Hinweises auf die Patenterteilung: **13.09.2006**
(21) Anmeldenummer: 03012399.6
(22) Anmeldetag: 30.05.2003
(51) Int. Cl.: F16M 1/00, F16J 15/06

(54) **Gehäuse mit Dichtung**
Housing with sealing
Carter avec joint d'étanchéité

(30) Priorität: 22.06.2002 DE 10227943
(43) Veröffentlichungstag der Anmeldung: 02.01.2004
(73) Patentinhaber: Rose Systemtechnik GmbH & Co. KG, 32457 Porta Westfalica (DE)
(72) Erfinder: Schaadt, Dieter B., 32429 Minden (DE); Seligmann, Heinfred, 33160 Luchte (DE)
(74) Vertreter: Philipp, Matthias

(56) Entgegenhaltungen:
- DE-C- 4 324 913
- GB-A- 328 593

## Beschreibung

Die Erfindung betrifft ein Gehäuse aus einer Gehäusewanne und einem darauf passenden lösbaren Gehäusedeckel mit einer zwischenliegenden elastischen Dichtung, die einerseits in einer randseitig umlaufenden Nut gehalten ist, und andererseits von einem zur Nut zentrierten federartigen Rand andrückend tangiert ist, die Dichtung eine geschlossene Rundschnur ist und die Nut eine Nuttiefe hat, die größer als der Dichtungsdurchmesser ist, und derart beabstandete sich verengende Nutflanken hat, daß die Dichtung beide tangiert, ansonsten in der Nut freiliegt, so daß der Rand angedrückt durchgehend auf der Dichtung aufliegt, indem diese jeweils elastisch in die Nut anpassend ausweicht, gemäß GB 328 593.

Bei diesen herkömmlichen Gehäusen mit einer Deckelabdichtung ragt typischerweise eine Feder, in eine Nut hinein, wobei zwischen der Feder und der Nut Dichtmaterial angeordnet ist. Um eine gute Abdichtung herzustellen, werden die beiden Gehäuseteile durch geeignete Mittel beispielsweise durch Schrauben gegeneinander gedrückt, die von einem Körper in den anderen Körper greifen und beim Anziehen das Dichtmaterial komprimieren. Die Nut und die Feder sind typischerweise im Querschnitt als Rechteck gebildet, d.h. die Nut hat im wesentlichen aus einer U-Form, wobei Rundungen in den Ecken ausgebildet sind, und die Feder ist aus einem kleineren, kongruenten Vorsprung gebildet, wobei zwischen Nut und Feder ein freies Spiel liegt. Das Dichtmaterial ist typischerweise eine (Dicht-) Schnur oder ein O-Ring, der im mittleren Bereich der Nut, d.h. von den Seitenwänden der Nut beabstandet, angeordnet ist.

Objekte, die im Gußverfahren und insbesondere im Metall-Gußverfahren hergestellt worden sind, weisen in randseitigen Bereichen, insbesondere in ein Nut oder auf einer Feder Lunker auf. Weisen eben die Bereiche, die im verschlossenen Zustand mit dem Dichtmaterial beaufschlagt sind, eine Lunker auf, so ist das Innere des Gehäuses undicht, insbesondere gegen Feuchtigkeit, die unter Druck einwirkt. In diesen Fällen können höhere Schutzarten bzw. Dichteklassen nur erreicht werden, indem die Feder und/oder die Nut einer weiteren Bearbeitung unterzogen wird/werden, beispielsweise durch Schleifen oder Fräsen, um die Lunker bzw. Unebenheiten zu beseitigen. Der Spanabhebenden Bearbeitung muß dann noch eine aufwendige Qualitätskontrolle auf freigelegte Lunkern erfolgen, der u. U. weitere Bearbeitung folgt, oder das Objekt muß verworfen werden, wenn keine Abhilfe zu schaffen ist.

Durch die weitere Bearbeitung kann ein Wasserschutz von IP X6 und mehr erreicht werden, in der Regel sogar IP X7, d.h. ein Schutz gegen Wasserbeaufschlagung unter festgelegten Druck- und Zeitbedingungen.

Aufgabe der Erfindung ist es, eine Abdichtung zu schaffen, mit der ohne zusätzliche Bearbeitungsvorgänge derart hohe Dichteklassen erreicht werden können.

Die Lösung besteht darin, daß der Rand eine zur Dichtung tangentiale, ebene Stirnfläche aufweist.

Vorteilhafte Ausgestaltungen sind in den Unteransprüchen angegeben.

Der Ausgestaltung gemäß der Erfindung liegt die Erkenntnis zugrunde, daß die randseitigen Flächen von im Gußverfahren hergestellten Körpern, wenn sie keilförmig verjüngt ausgebildet sind, d.h. bei der Nut die beiden verjüngt auslaufenden Schenkel der U-Form und bei der Feder die freien Flächen, in der Regel keine Lunker aufweisen. Unter Ausnutzung dieser Erkenntnis werden erfindungsgemäß die Anlageflächen des Dichtmaterials in diese in Steckrichtung verlaufenden Bereiche der Ausnehmung und des stumpfen, keilförmigen Randbereichs der Feder verlegt, wo Lunkerfreiheit vorliegt, wodurch die Qualität der Abdichtung garantiert ist. Dazu ergibt die neue Anordnung der Dichtung mit freier Anlage zwischen den verengend zulaufenden Nutwänden eine automatische Tiefenlageanpassung der Dichtung, die einen Ausgleich für etwaige Abweichungen der Federstirnseite auch abweichend von einer idealen Ebene schafft. Es ist also eine Rundumabdichtung gewährleistet.

Die Erfindung wird nachfolgend anhand eines Ausführungsbeispiels unter Bezugnahme auf eine Zeichnung erläutert. Es zeigen:
- Fig. 1: eine Querschnittansicht eines Behälters mit Deckel mit einer erfindungsgemäßen Nut Abdichtung im Teilschnitt;
- Fig. 2: eine Querschnittansicht der Nut und Feder in Explosionsdarstellung.

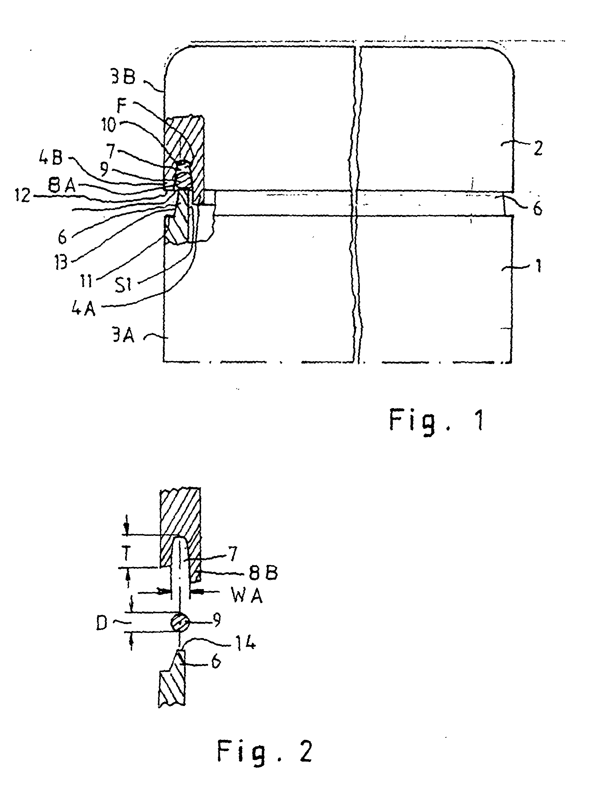

Eine erfindungsgemäße Abdichtung eines Gehäuses, das aus einer Gehäusewanne 1 und einem Deckel 2 gebildet ist, ist in Fig. 1 dargestellt.

Der Deckel 2 trägt eine umlaufende Nut 7 mit eingelegtem Dichtmaterial 9 und das Gehäuse 1 einen umlaufenden, stumpfen keilförmigen Rand 6 nach Art einer zur Nut lose passenden Feder, so daß eine umlaufende und somit vollständige Abdichtung des Gehäuses zu gewährleisten ist. Alternativ kann die Nut dem Behälter und die Feder dem Deckel zugeordnet sein.

Um das Innere des Gehäuses gegen Feuchtigkeit unter Druck zu schützen, ist das Dichtmaterial bevorzugt ein O-Ring, der zwischen sich verengenden Nutschenkeln 4A, 4B eingeklemmt gehalten ist.

Bei geschlossenem Behälter ist die Dichtung 9 zwischen den Federstirnseiten 14 und den Nutenschenkeln 4A, 4B angeordnet. Um höhere Dichteklassen des verschlossenen Gehäuses zu erreichen, kann der Deckel 2 beispielsweise mittels Schrauben unter Kompression der Dichtung 9 gegen den Behälter 1 gedrückt werden. Wenn die Schrauben stärker angezogen werden, so wird das Dichtmaterial zwischen Feder und Nut zum einen stärker komprimiert und liegt zum anderen flächiger an der Feder und der Nut an, so daß höhere Dichteklassen erreicht werden.
Die Nutenflanken 8A, 8B sind beispielsweise in einem Winkel von 10°-40° nach innen konvergierend ausgebildet. Bevorzugt ist eine Winkelstellung von 15° an beiden Seiten. Der Nutengrund 10 ist eben oder abgerundet, und die Schenkel 4A, 4B sind stirnseitig abgeflacht. Die Außenseiten 3A, 3B des Deckels 2 und der Wanne 1 sind bevorzugt fluchtend zueinander ausgebildet. Dem äußeren Nutschenkel 4B liegt an seiner Stirnseite 12 eine parallele Anschlagfläche 11 gegenüber, die sich seitlich des als Feder dienenden Wannenrandes 6 erstreckt. Der inneren Nutenschenkel 4A ist vorteilhaft als ein Führungsschenkel länger als der andere Schenkel 4B ausgebildet und greift in loser Fassung in die Wanne 1 neben dem Dichtbereich ein.

Der Rand 6 der Wanne 1 ist als abgestumpfter Keil ausgebildet, so daß seine Stirnfläche 14 tangential auf der Dichtung 9 aufsetzt. Die Breite der Stirnfläche entspricht etwa 1/3 des Dichtungsdurchmessers D. Die Länge des Randes 6 ist etwas kleiner als die Nuttiefe T, die etwa 1 _ mal größer ist als der Dichtungsdurchmesser D, so daß unter der eingelegten Dichtung ein Freiraum F besteht, in den diese komprimiert durch Andruckmittel ausweichen kann. Der Rand 6 weist vorzugsweise an mindestens einer Seite eine Federschräge 13 von ca. 20° auf, die eine Verjüngung zur Stirnseite 14 erbringt, so daß diese in eingesetzten Zustand des Deckel beidseitig zu den Nutenflanken 8A, 8B ein loses Federspiel S1 aufweist.

Die äußere Nutweite WA ist etwas größer als der Dichtungsdurchmesser D, so daß bei loser eingelegter Dichtung diese etwa bündig mit der Nut abschließt.

Die unbearbeiteten Leichtmetall-Gußkörper des Deckels und der Wanne weisen insbesondere an den verjüngt zulaufenden Flanken der Nut und der Stirnseite der Feder dichte lunkerfreie, glatte Flächen auf. Da keine Bearbeitung erfolgt, werden innerliche Lunker nicht geöffnet; diese stören also nicht die Abdichtung. Die unbearbeiteten Randbereiche sind andererseits durch Verzug beim Abkühlen der Metallschmelze uneben.

Durch die Ausweichmöglichkeit der Dichtung in die Nut, paßt sich diese den Unebenheiten an, und die hochgradige Abdichtung wird gewährleistet. Es werden Dichtklassen von Ip67 und mehr erreicht. Ausschuß von Teilen, die beim bisher üblichen Anschleifen durch das Öffnen von Lunkern entstand, fällt nicht mehr an.

### Bezugszeichenliste

- 1: Gehäusewanne
- 2: Gehäusedeckel
- 3A, 3B: Außenwände
- 4A: Führungsschenkel
- 4B: Nutenschenkel
- 6: Wannenrand
- 7: Nut
- 8A, 8B: Nutflanken
- 9: Dichtring
- 10: Nutengrund
- 11: Wannenanschlag
- 12: Deckelanschlag
- 13: Federschräge
- 14: Stirnfläche
- F: Freiraum
- S1: Federspiel
- WA: Nutweite außen
- D: Schnurdurchmesser
- T: Nuttiefe

## Patentansprüche

1. Gehäuse aus einer Gehäusewanne (1) und einem darauf passenden lösbaren Gehäusedeckel (2) mit einer zwischenliegenden elastischen Dichtung (9), die einerseits in einer randseitig umlaufenden Nut (7) gehalten ist, und andererseits von einem zur Nut (7) zentrierten federartigen Rand (6) andrückend tangiert ist, wobei die Dichtung (9) eine geschlossene Rundschnur ist und die Nut (7) eine Nuttiefe (T) hat, die größer als der Dichtungsdurchmesser (D) ist, und derart beabstandete sich verengende Nutflanken (8A, 8B) hat, daß die Dichtung (9) beide tangiert, ansonsten in der Nut (7) freiliegt, so daß der Rand (6) angedrückt durchgehend auf der Dichtung (9) aufliegt, indem diese jeweils elastisch in die Nut (7) anpassend ausweicht, **dadurch gekennzeichnet, daß** der Rand (6) eine zur Dichtung (9) tangentiale, ebene Stirnfläche (14) aufweist.

2. Gehäuse nach Anspruch 1, **dadurch gekennzeichnet, daß** die Nutflanken (8A, 8B) in einem Winkel von 10° - 40° bevorzugt beidseitig je 15° zueinander stehen.

3. Gehäuse nach Anspruch 1 oder 2, **dadurch gekennzeichnet, daß** die Nut (7) einen etwa ebenen Nutgrund (10) aufweist und stirnseitig etwa ebene Nutschenkel (4A, 4B) aufweist.

4. Gehäuse nach Anspruch 3, **dadurch gekennzeichnet, daß** einer der Nutschenkel (4A) sich als ein Führungsschenkel mit einem Spiel (S1) neben dem federartigen Rand (6) erstreckt.

5. Gehäuse nach einem der Ansprüche 1 bis 4, **dadurch gekennzeichnet, daß** der Rand (6) einseitig eine Federschräge (13) aufweist, die ein Federspiel zum benachbarten Nutschenkel (4B) aufweist.

6. Gehäuse nach einem der vorstehenden Ansprüche, **dadurch gekennzeichnet, daß** neben dem federartigen Rand (6) sich eine Anschlagfläche (11) seitlich erstreckt, die sich parallel und gegenüberliegend zu einer freien Anschlagfläche (12) eines der Nutschenkel (4B) erstreckt.

7. Gehäuse nach einem der vorstehenden Ansprüche, **dadurch gekennzeichnet, daß** dessen Gehäusewanne (1) und Gehäusedeckel (2) zueinander fluchtende Innen- oder Außenwände (3A, 3B) im Bereich der Nut- Randdichtung (6, 7, 9) aufweisen.

8. Gehäuse nach einem der vorstehenden Ansprüche, **dadurch gekennzeichnet, daß** es aus Metallguß hergestellt ist und der Rand (6) sowie die Nut (7) nicht materialabtragend bearbeitet sind.

## Claims

1. Housing comprising a housing trough (1) and a detachable housing cover (2) fitting thereon, with an intervening elastic seal (9) which, on the one hand, is held in a groove (7) skirting the marginal side and, on the other hand, is tangented in contact-pressing arrangement by a tongue-like edge (6) centred relative to the groove (7), wherein the seal (9) is a closed cord and the groove (7) has a groove depth (T) which is greater than the seal diameter (D), and has narrowing groove flanks (8A, 8B) spaced in such a way that the seal (9) tangents both, otherwise lies exposed in the groove (7), so that the edge (6), under contact pressure, rests continuously on the seal (9), in that the latter respectively deflects elastically into the groove (7) in an adaptive manner, **characterized in that** the edge (6) has a plane end face (14) tangential to the seal (9).

2. Housing according to Claim 1, **characterized in that** the groove flanks (8A, 8B) stand at an angle of 10° - 40° to one another, preferably of 15° on either side.

3. Housing according to Claim 1 or 2, **characterized in that** the groove (7) has an approximately plane groove bottom (10) and, on the end side, has approximately plane groove legs (4A, 4B).

4. Housing according to Claim 3, **characterized in that** one of the groove legs (4A) extends as a guide leg, with a clearance (S1), alongside the tongue-like edge (6).

5. Housing according to one of Claims 1 to 4, **characterized in that** the edge (6) has on one side a tongue bevel (13), which has a tongue clearance with respect to the adjacent groove leg (4B).

6. Housing according to one of the preceding claims, **characterized in that** extending laterally alongside the tongue-like edge (6) is a stop face (11), which extends parallel and opposite to a free stop face (12) of one of the groove legs (4B).

7. Housing according to one of the preceding claims, **characterized in that** the housing trough (1) and housing cover (2) thereof have inner and outer walls (3A, 3B), mutually aligned, in the region of the groove marginal seal (6, 7, 9).

8. Housing according to one of the preceding claims, **characterized in that** it is made from cast metal and the edge (6) and the groove (7) are worked in a non-material-removing manner.

## Revendications

1. Carter formé d'un auge de carter (1) et d'un couvercle de carter (2) désolidarisable, s'ajustant sur elle, avec un joint d'étanchéité (9) élastique interposé qui, est maintenu de son côté dans une rainure (7) de pourtour, située côté bordure, et est placé en tangence, avec pressage, par une bordure (6) du genre d'un languette, centrée par rapport à la rainure (7), le joint d'étanchéité (9) comprenant un cordon rond fermé et la rainure (7) présentant une profondeur de rainure (T) supérieure au diamètre (D) du joint d'étanchéité et ayant des flancs de rainure (8A, 8B) allant en rétrécissant, en étant espacés, de manière que le joint d'étanchéité (9) soit tangent aux deux flancs de rainure, en étant au reste libre à l'intérieur de la rainure (7), de manière que le bord (7) repose en étant pressé continûment sur le joint d'étanchéité (9), en ce que celui-ci s'échappe, en s'adaptant chaque fois élastiquement, dans la rainure (7), **caractérisé en ce que** le bord (7) présente une face frontale (14) plane, tangentielle au joint d'étanchéité (9).

2. Carter selon la revendication 1, **caractérisé en ce que** les flancs de rainure (8A, 8B) sont placés l'un par rapport à l'autre sous un angle de 10° à -40°, de préférence de 15° de part et d'autre, chaque fois.

3. Carter selon la revendication 1 ou 2, **caractérisé en ce que** la rainure (9) présente un fond de rainure (10) à peu près plan, et présente frontalement des branches de rainure (4A, 4B) à peu près planes.

4. Carter selon la revendication 3, **caractérisé en ce que** l'une des branches de rainure (4A) s'étend sous forme de branche de guidage avec un jeu (S1), à côté du bord (6) du genre d'une languette.

5. Carter selon l'une des revendications 1 à 4, **caractérisé en ce que** le bord (6) présente, sur un côté, un chanfrein de languette (13), présentant un jeu de languette par rapport à la branche de rainure (4B) voisine.

6. Carter selon l'une des revendications précédentes, **caractérisé en ce que**, à côté du bord (6) du genre d'une languette, s'étend latéralement une face de butée (11), qui s'étend, parallèlement et à l'opposé, d'une face de butée (12) libre d'une des branches de rainure (4B).

7. Carter selon l'une des revendications précédentes, **caractérisé en ce que** son auge de carter (1) et son couvercle de carter (2) présentent des parois intérieure ou extérieure (3A, 3B) alignées entre elles, dans la zone du joint d'étanchéité de bordure de rainure (6,7,9).

8. Carter selon l'une des revendications précédentes, **caractérisé en ce qu'**il est fabriqué de fonderie, en métal, et le bord (6), ainsi que la rainure (7), sont usinés sans enlèvement de matière.
